# EUROPEAN PATENT APPLICATION

(11) **EP 4 616 744 A1**
(43) Date of publication of application: **17.09.2025**
(21) Application number: 24163068.0
(22) Date of filing: 12.03.2024
(51) Int. Cl.: A24F 40/53, A24F 40/65, A24F 40/90, H02J 7/00

(54) **AEROSOL PROVISION SYSTEM**

(71) Applicant: Nicoventures Trading Limited, London WC2R 3LA (GB)
(72) Inventor: KOCH, Stefan, London (GB); BRUTON, Connor, London (GB)
(74) Representative: Dehns

(57) **Abstract**

An aerosol provision device comprises a controller configured to receive input data relating to a charge level of a power source. The controller is configured to predict a depletion of the power source by using a substantially constant rate of decrease in charge level based on the input data.

## Description

### TECHNICAL FIELD

The present disclosure relates to an aerosol provision device; an aerosol provision system comprising the aerosol provision device; and a computer-implemented method of predicting a depletion of a power source.

### BACKGROUND

The operation of delivery systems, such as aerosol provision systems, may be controlled by a controller. A delivery system may comprise an outer housing, a memory, a controller configured to control operation of the delivery system, a control interface for receiving inputs to the delivery system and providing outputs from the delivery system, and a power source configured to supply electrical power for operation of the delivery system. The delivery system may also comprise an aerosol generator, configured to generate aerosol from aerosol generating material, which may be in the form of a liquid, solid, or gel. The operation of the delivery system and the outputs provided by the control interface may be controlled by the controller comprised in the delivery system.

### SUMMARY

In accordance with some embodiments described herein, there is provided an aerosol provision device comprising a controller configured to receive input data relating to a charge level of a power source, wherein the controller is configured to predict a depletion of the power source by using a substantially constant rate of decrease in charge level based on the input data.

The substantially constant rate of decrease in charge level may be calculated from a decrease in the charge level over a period of time.

The substantially constant rate of decrease in charge level may be calculated from a decrease in the charge level based on past input data. The past input data may relate to a previous session, i.e. immediately preceding a current or ongoing session, or a past session, e.g. from a previous day, week or month.

The depletion may comprise at least one of:
a future charge level of the power source;
a time remaining until the power source is depleted;
a time at which the power source will be depleted; and
a predicted number of uses left until the power source is depleted.

The number of uses left may be the number of inhalations or sessions left until the power source is depleted.

The controller may be configured to predict the depletion according to a first scheme in which the substantially constant rate of decrease in charge level is calculated from a decrease in charge level during a past session. The past session may be a previous session. The substantially constant rate of decrease in charge level may be calculated from past input data stored in a memory.

The controller may be configured to predict the depletion according to the first scheme at the beginning of a session.

The controller may be configured to predict the depletion according to a second scheme in which the substantially constant rate of decrease in charge level is calculated from a decrease in charge level during an ongoing session.

The decrease in charge level during an ongoing session may be calculated from a decrease in charge level between the beginning of a first use, i.e. inhalation, of the aerosol provision device and the end of a second use of the aerosol provision device. The second use of the aerosol provision device may be a latest use of the aerosol provision device.

The controller may be configured to predict the depletion according to a third scheme in which the substantially constant rate of decrease in charge level is calculated from a decrease in charge level during a latter portion of an ongoing session.

The controller may be configured to predict the depletion according to the third scheme when the charge level of the power source is below a threshold level. The threshold level may be any one of 25%, 20%, 15%, 10% and 5% of the maximum charge level. The latter portion of the ongoing session may correspond to fewer than the last 10 uses, fewer than the last 5 uses or fewer than the last 3 uses of the aerosol provision device during the ongoing session.

The controller may be configured to calculate an updated substantially constant rate of decrease in charge level during the ongoing session. The updated substantially constant rate of decrease in charge level may be calculated upon receipt of further input data. An updated substantially constant rate of decrease in charge level may be calculated at regular intervals during the ongoing session. For example, the substantially constant rate of decrease in charge level may be recalculated every 5 uses or inhalations.

An updated substantially constant rate of decrease in charge level may be calculated more frequently when the controller is configured to predict the depletion according to the third scheme.

The controller may be configured to predict the depletion time according to a fourth scheme in which the controller retrieves the substantially constant rate of decrease in charge level that is stored in a memory. The controller may be configured to predict the depletion according to the fourth scheme for a first session of use.

The controller may be configured to store the substantially constant rate of decrease in charge level or the updated substantially constant rate of decrease in charge level in a memory after the end of a session.

The aerosol provision device may comprise a memory.

The aerosol provision device may comprise a user interface, the controller being configured to provide an output via the user interface. The output may be a visual output, an auditory output, a haptic output and any combination thereof. The controller may be configured to provide the depletion as an output via the user interface.

The aerosol provision device may comprise the power source. The power source may be a battery.

In accordance with other embodiments described herein, there is provided an aerosol provision system comprising the aerosol provision device of any one of the preceding paragraphs and a consumable.

In accordance with further embodiments described herein, there is provided a computer-implemented method of predicting a depletion of a power source comprising:
receiving input data of a charge level of a power source; and
predicting a depletion by using a substantially constant rate of decrease in charge level based on the input data.

Any aspect may comprise any feature or functional step described with respect to another aspect. In particular, the computer-implemented method may comprise any capability described in relation to the controller as a method step and vice versa.

### FIGURES

Aspects of the invention will now be described, by way of example only, with reference to accompanying drawings, in which:
Figure 1 shows a cross-sectional view through a schematic representation of an aerosol provision system in accordance with certain embodiments.
Figure 2 shows a cross-sectional view through a schematic representation of an aerosol provision system in accordance with certain embodiments.
Figure 3 shows a cross-sectional view through a schematic representation of an aerosol provision system in accordance with certain embodiments.
Figure 4 shows a schematic representation of a system comprising an aerosol provision device, a consumable, an external power source device, local computing devices, and a remote computing device, in accordance with certain embodiments.
Figure 5 shows a computer-implemented method of predicting depletion of a power source in accordance with certain embodiments.
Figure 6 shows an example of the method of predicting a depletion of a power source according to a first scheme.
Figure 7 shows an example of the method of predicting a depletion of a power source according to a second scheme.
Figure 8 shows an example of the method of predicting a depletion of a power source according to a third scheme.

### DETAILED DESCRIPTION

Aspects and features of certain examples and embodiments are discussed or described herein. Some aspects and features of certain examples and embodiments may be implemented conventionally and these are not discussed/described in detail in the interests of brevity. It will thus be appreciated that aspects and features of apparatus and methods discussed herein which are not described in detail may be implemented in accordance with any conventional techniques for implementing such aspects and features.

The present application is generally directed to the field of "delivery systems", i.e. systems that deliver at least one substance to a user. Generally, the aim of delivering that substance to a user will be to satisfy a particular "consumer moment". To this end, the substance may comprise constituents which impart a physiological effect on the user, a sensorial effect on the user, or both. In this context, the substance will generally be present in an aerosol-generating material or another material that is not intended to be aerosolised. The material itself (whether for aerosolisation or not) will typically contain a range of constituents. These are generally broken down as active substances, flavours, aerosol-former materials and other functional materials like fillers. An active substance, when delivered to a user, may result in some form of psychological effect on the user.

The delivery systems take many forms. According to the present disclosure, a "combustible" aerosol provision system is one where a constituent aerosol-generating material of the aerosol provision system (or component thereof) is combusted or burned during use in order to facilitate delivery of at least one substance to a user.

Exemplary combustible aerosol provision systems include cigarettes, cigarillos, cigars, and tobacco for pipes or for roll-your-own or for make-your-own cigarettes (whether based on tobacco, tobacco derivatives, expanded tobacco, reconstituted tobacco, tobacco substitutes or other smokable material). Exemplary non-combustible aerosol provision systems include heat-not-burn aerosol provision systems (such as Tobacco Heating Products (THPs) and Carbon-tipped Tobacco Heating Products (CTHPs)) in which a solid material is heated to generate aerosol without combusting the material, vapour aerosol provision systems (commonly known as "electronic cigarettes" or "e-cigarettes") in which liquid material is heated to generate aerosol, and hybrid aerosol provision systems that are similar to vapour aerosol provision systems except that the aerosol generated from the liquid material passes through a second material (such as tobacco) to pick up additional constituents before reaching the user. Exemplary aerosol-free delivery systems that deliver the at least one substance to a user orally, nasally, transdermally or in another way without forming an aerosol, including but not limited to, lozenges, gums, patches, articles comprising inhalable powders, and oral products such as oral tobacco which includes snus or moist snuff, wherein the at least one substance may or may not comprise nicotine.

While various techniques will be described herein with regard to non-combustible aerosol provision systems, these may readily be applied in the context of any of the aforementioned delivery systems, for example by implementation within a delivery system where feasible, or in a "smart" container for delivery systems, e.g. for storing delivery systems. The delivery system described herein can be implemented as a combustible aerosol provision system, a non-combustible aerosol provision system or an aerosol-free delivery system.

In particular, but not exclusively, the present disclosure relates to a non-combustible aerosol provision system. A "non-combustible" aerosol provision system is an aerosol provision system where a constituent aerosol generating material of the aerosol provision system (or component thereof) is not combusted or burned in order to facilitate delivery of at least one substance to a user. The delivery system may be a non-combustible aerosol provision system, such as a powered non-combustible aerosol provision system. The non-combustible aerosol provision system may be an electronic cigarette, also known as a vaping device or electronic nicotine delivery system (END), although it is noted that the presence of nicotine in the aerosol-generating material is not a requirement. The non-combustible aerosol provision system may be an aerosol generating material heating system, such as a heat-not-burn system. An example of such a system is a tobacco heating system. In particular, but not exclusively, the present disclosure relates to an electronic aerosol provision system, which may (or may not) be an electronic non-combustible aerosol provision system.

Aerosol-generating material is a material that is capable of generating aerosol, for example when heated, irradiated or energized in any other way. Aerosol-generating material may, for example, be in the form of a solid, liquid or semi-solid (such as a gel) which may or may not contain an active substance and/or flavourants. The aerosol-generating material may comprise one or more active substances and/or flavours, one or more aerosol-former materials, and optionally one or more other functional material. The aerosol-generating material may comprise a binder, such as a gelling agent, and an aerosol former. Optionally, a substance to be delivered and/or filler may also be present. Optionally, a solvent, such as water, is also present and one or more other components of the aerosol-generating material may or may not be soluble in the solvent. In some embodiments, the aerosol-generating material is substantially free from botanical material. In particular, in some embodiments, the aerosol-generating material is substantially tobacco free.

The aerosol-generating material may comprise or be in the form of an aerosol-generating film. The aerosol-generating film may comprise a binder, such as a gelling agent, and an aerosol former. Optionally, a substance to be delivered and/or filler may also be present. The aerosol-generating film may be substantially free from botanical material. In particular, in some embodiments, the aerosol-generating material is substantially tobacco free. The aerosol-generating film may have a thickness of about 0.015 mm to about 1 mm. For example, the thickness may be in the range of about 0.05 mm, 0.1 mm or 0.15 mm to about 0.5 mm or 0.3 mm. The aerosol-generating film may be continuous. For example, the film may comprise or be a continuous sheet of material. The sheet may be in the form of a wrapper, it may be gathered to form a gathered sheet or it may be shredded to form a shredded sheet. The shredded sheet may comprise one or more strands or strips of aerosol-generating material. The aerosol-generating film may be discontinuous. For example, the aerosol-generating film may comprise one or more discrete portions or regions of aerosol-generating material, such as dots, stripes or lines, which may be supported on a support. In such embodiments, the support may be planar or non-planar. The aerosol-generating film may be formed by combining a binder, such as a gelling agent, with a solvent, such as water, an aerosol-former and one or more other components, such as one or more substances to be delivered, to form a slurry and then heating the slurry to volatilise at least some of the solvent to form the aerosol-generating film. The slurry may be heated to remove at least about 60 wt%, 70 wt%, 80 wt%, 85 wt% or 90 wt% of the solvent.

The aerosol-generating material may comprise or be an "amorphous solid". In some embodiments, the aerosol-generating materiel comprises an aerosol-generating film that is an amorphous solid. The amorphous solid may be a "monolithic solid". The amorphous solid may be substantially non-fibrous. In some embodiments, the amorphous solid may be a dried gel. The amorphous solid is a solid material that may retain some fluid, such as liquid, within it. In some embodiments, the amorphous solid may, for example, comprise from about 50wt%, 60wt% or 70wt% of amorphous solid, to about 90wt%, 95wt% or 100wt% of amorphous solid. The amorphous solid may be substantially free from botanical material. The amorphous solid may be substantially tobacco free.

The aerosol-former material may comprise one or more constituents capable of forming an aerosol. In some embodiments, the aerosol-former material may comprise one or more of glycerol, propylene glycol, diethylene glycol, triethylene glycol, tetraethylene glycol, 1,3-butylene glycol, erythritol, meso-Erythritol, ethyl vanillate, ethyl laurate, a diethyl suberate, triethyl citrate, triacetin, a diacetin mixture, benzyl benzoate, benzyl phenyl acetate, tributyrin, lauryl acetate, lauric acid, myristic acid, and propylene carbonate. The one or more other functional materials may comprise one or more of pH regulators, colouring agents, preservatives, binders, fillers, stabilizers, and/or antioxidants.

As is common in the technical field, the terms "vapour" and "aerosol", and related terms such as "vaporise", "volatilise" and "aerosolise", may generally be used interchangeably. In use, an inhalation on the aerosol provision system occurs when a user inhales aerosol generated from the aerosol generating material. A sequence of inhalations can be considered a "session" or "a session of use". A sequence may correspond to a characteristic pattern of inhalations. A sequence may correspond to a predetermined number, or range, or inhalations on the aerosol provision system by the user. For example, a session may be defined as 10 inhalations, or between 8 to 12 inhalations. Additionally or alternatively, a session may be defined by a predetermined time from an initial inhalation on the aerosol provision system (for example, with aerosol generating material being heated to a target temperature for the predetermined time). For example the predetermined time may be under 4 four minutes, under 6 minutes, or under 10 minutes. Hence, a session can be defined when the total number inhalations reaches a predetermined number, or range, of inhalations and/or when the time elapsed from the initial inhalation reaches the predetermined time. It should be appreciated that the values for the predetermined number of inhalations and predetermined time have been given purely as an example, and other numbers and times may be used in other implementations as appropriate.

Additionally or alternatively, in an embodiment a session corresponds to a sequence of inhalations, the sequence separated from another session by a pause of more than a threshold duration. The threshold duration may be selected for ease of comprehension by the user (e.g. 5, 10, 15, 20, 25, 30, 35, 40, 45, 50 or 55 minutes, or more preferably a period in the range 5-45 minutes, or more preferably a period in the range 10-30 minutes, or still more preferably a period in the range 15-20 minutes), or it may be selected on a pharmokinetic basis, such as the so-called half-life of nicotine in the body (approximately 2 hours) or a physiological basis, such as a perceived drop in brain stimulation by the nicotine (for example in the order of 15-25 minutes, averaging around 18-20 minutes).

Optionally this half-life may in turn be individualised, e.g. on the basis of sex, build (size, weight etc), ethnicity and the like. A look-up table of half-life values, and/or a scaling value for one or more physiological factors of the user may be used to refine an otherwise generic half-life value. Hence an inhalation session may comprise a characteristic pattern and/or may be separated from another session by a threshold duration of non-use.

In an embodiment, the definition of a session, i.e. the sequence of inhalations, the predetermined time from an initial inhalation and/or the threshold duration separating sequences may be personalised based on a user behaviour and/or manually personalised by a user. User behaviour refers to the way a user interacts with the aerosol provision device. User behaviour comprises the repeated patterns of use of the aerosol provision system by the user.

Typically, the aerosol provision system may comprise an aerosol provision device (e.g. a reusable part) and a consumable for use with the aerosol provision device (e.g. a disposable part). In many cases, the consumable is sold separately from the device, and often in a multipack. The terms "consumable" and "article" may generally be used interchangeably. Often the consumable will comprise the aerosol generating material, and the aerosol provision device will comprise a power source, controller, control interface, and memory (each of which will be discussed in more detail herein) enclosed at least partly within an outer housing which may be formed from any suitable material, for example a plastics material or a metal. In use, the consumable may be engaged with the aerosol provision device. For example, at least part of the consumable may be received by the aerosol provision device, for example in a consumable chamber of the aerosol provision device which is configured to receive at least part of the consumable. The aerosol provision device is configured to generate aerosol from the aerosol generating material of the consumable. Once the aerosol generating material of consumable has been exhausted, the user can remove the consumable, e.g. by disengaging the aerosol provision device and the consumable, dispose of it, and replace it with a (new) consumable. Devices conforming to this type of two-piece modular configuration may generally be referred to as two-piece aerosol provision devices, which together with a consumable may generally be referred to as two-piece aerosol provision systems.

In such two-piece aerosol provision systems, the consumable and aerosol provision device are able to engage with one another. For example, the consumable may be mechanically and/or electrically coupled to the aerosol provision device, using an engagement interface of the aerosol provision device and a corresponding engagement interface of the consumable. The engagement interface of the aerosol provision device may comprise mechanical engagement means for mechanical coupling with the consumable, e.g. with corresponding mechanical engagement means of the consumable. The engagement interface may comprise an electrical engagement interface for electrically connecting with the consumable, e.g. with a corresponding electrical engagement interface of the consumable. The electrical engagement interface of the aerosol provision device may be configured to supply electrical power to the consumable, for example to an aerosol generator of the consumable (as will be discussed in more detail herein).

While a consumable commonly comprises a single portion of aerosol generating material, in some cases the consumable may comprise a plurality of portions of aerosol generating material, each of which may be different.

Embodiments are also envisaged in which the aerosol provision device is a one-piece aerosol provision device, which is not configured to receive a removable consumable, and instead the aerosol provision device itself comprises the aerosol generating material. The one-piece aerosol provision device may be configured to be refillable, such that when at least a portion of the (initial) aerosol generating material of the aerosol provision device is exhausted, it can be refilled with (new) aerosol generating material. Alternatively, the one-piece aerosol provision device may be a disposable one-piece aerosol provision device, which the user can dispose of once the aerosol generating material has been exhausted (for example, after a predetermined number of inhalations), and for example is not configured to be refillable by the user. Further, the one-piece aerosol provision device may be a non-rechargeable one-piece aerosol provision device, not comprising a charging interface (as will be discussed in more detail herein) for receiving power from an external power source. A one-piece aerosol provision device such as these (either refillable or disposable) may use any of the features used in two-piece (and/or multi-consumable) aerosol provision systems, such as, but not limited to, the aerosol generating material, aerosol generator, power source, control interface, controller, and memory (as will be discussed in more detail herein). Likewise, these components may be enclosed at least partly within an outer housing which may be formed from any suitable material, for example a plastics material or a metal.

The aerosol provision system (e.g. the aerosol provision device thereof) may be elongate, extending along a longitudinal axis. The aerosol provision system (e.g. the aerosol provision device thereof) has a proximal end, which will be closest to the user (e.g. the user's mouth) when in use by the user to inhale aerosol generated by the aerosol provision system, and a distal end which will be furthest from the user when in use, i.e. at an end opposing the proximal end.

The proximal end may also be referred to as the "mouth end". The aerosol provision system (e.g. the aerosol provision device thereof) accordingly defines a proximal direction, which is directed towards the user when in use, e.g. along the longitudinal axis from the distal end to the proximal end. Further, the aerosol provision system likewise defines a distal direction, which is directed away from the user when in use, e.g. along the longitudinal axis from the proximal end to the distal end. The terms 'proximal' and 'distal' as applied to features of the aerosol provision system (e.g. aerosol provision device) will be described by reference to the relative positioning of such features with respect to each other in a proximal or distal direction along the longitudinal axis.

The construction of the aerosol provision system (and aerosol provision device thereof) may change depending upon the form of the aerosol generating material which it is configured to generate aerosol from. However, while examples will be discussed below with regard to various different forms of aerosol generating material, and correspondingly different aerosol provision device constructions, the techniques discussed herein may be applied in all forms of the aerosol generating material.

The aerosol provision system (e.g. the aerosol provision device thereof) comprises an aerosol generator configured to generate aerosol from the aerosol generating material, the aerosol being generated at an aerosol generation area of the aerosol provision system. The aerosol generator often, but not always, comprises a heating assembly configured to heat the aerosol generating material and cause it to volatise, thereby generating aerosol which can be inhaled by the user. While many features will be discussed herein with regard to an aerosol generator which comprises a heating assembly, we note that these features may likewise be applied to an aerosol generator which does not necessarily comprise a heating assembly. For example, the aerosol generator may be configured to subject the aerosol-generating material to one or more of vibration, increased pressure, or electrostatic energy.

The aerosol provision system (e.g. the aerosol provision device thereof) often comprises a heating chamber, which the heating assembly is configured to heat, such that aerosol generating material in the heating chamber is heated. In such arrangements, the heating chamber may correspond to the aerosol generation area.

The heating assembly may comprise a heating element, and the heating assembly is configured to heat the heating element. The heating element is for heating the aerosol generating material, e.g. by being configured to heat the heating chamber. The heating element may be a part of the aerosol provision device, or a part of the consumable, or may be a separate component which is a part of the aerosol provision system in addition to the aerosol provision device and the consumable.

In some arrangements the heating assembly is configured to cause the heating element to become heated by resistive heating, wherein a current is passed through the heating element in order to cause heating to occur as a result of the electrical resistance of the heating element. In some arrangements the heating assembly is configured to cause a heating element to become heated by inductive heating, in which case a magnetic field generator of the heating assembly is configured to generate a varying magnetic field that penetrates the heating element, and causes susceptor material within the heating element to become heated. In other words, the susceptor material is configured to be heated by penetration with a varying magnetic field. The magnetic field generator may comprise a coil, such as a helical coil, which may encircle at least part of the heating chamber.

Arrangements are contemplated in which the heating assembly comprises a radiation heating component configured to generate radiation for heating the aerosol generating material, e.g. for heating the heating chamber. The radiation may comprise electromagnetic radiation, such as infrared radiation or microwave radiation, or sonic radiation, such as ultrasonic radiation.

Each of these heating techniques may be applied to any of the aerosol generating materials discussed above, and in the context of one-piece aerosol provision systems, two-piece aerosol provision systems, and multi-consumable aerosol provision systems, or any other form of delivery system which uses heating to generate aerosol from aerosol generating material.

In arrangements where the aerosol generating material is a liquid, the aerosol generating can be stored within a reservoir comprised in the aerosol provision system. The reservoir may a part of the aerosol provision device, particularly in the case that the aerosol provision device is a one-piece aerosol provision device, or may a part of the consumable (when present). In arrangements where the reservoir storing the aerosol generating material is a part of the consumable, the consumable may also comprise the heating element, which may be heated using resistive or inductive heating. In such arrangements where the consumable comprises a reservoir storing aerosol generating material, the consumable may be referred to as a cartridge.

The reservoir may have the form of a storage tank, being a container or receptacle in which aerosol generating material can be stored such that the liquid is free to move and flow within the confines of the tank. In arrangements in which the reservoir is comprised in the consumable, the reservoir may be sealed after filling during manufacture so as to be disposable after the aerosol generating material is consumed, otherwise, it may have an inlet port through which new aerosol generating material can be added by the user. In such arrangements the heating element may be comprised in the consumable, and the heating element may be located externally of the reservoir tank for generating the aerosol by vaporisation of the aerosol generating material by heating. A transfer arrangement which may comprise a wick or other porous element may be provided to deliver aerosol generating material from the reservoir to the heating element. This aerosol generating material is thereby heated and vaporised, to be replaced by new aerosol generating material from the reservoir for transfer to the heating element by the wick transfer arrangement. The transfer arrangement may be thought of as a conduit between the reservoir and the heating element that transfers aerosol generating material from the reservoir to the heating element. Although discussed in the context of a reservoir and heating element comprised in the consumable, these features may likewise be applied in an aerosol provision device, for example in the case the aerosol provision device is a one-piece aerosol provision device.

In arrangements where the aerosol generating material is a solid or a gel, the aerosol generating material can be provided in the consumable. The consumable may be in a rod format, which may also interchangeably be referred to as a "stick" format, and which may have a cylindrical shape. In some cases, the consumable further comprises a filter and/or a cooling element. In such cases, the consumable may comprise the mouthpiece. The consumable may comprise a wrapper, which at least partially surrounds other components of the consumable, including one or more of a filter, a cooling element, a mouthpiece and the aerosol generating material. In some cases, the wrapper may comprise a paper layer. In some cases, the wrapper may comprise a non-combustible layer (e.g. a layer which is resistant to combustion), such as a metallic foil. Suitably, the wrapper may comprise an aluminium foil layer. The wrapper may comprise a laminate structure, and in some cases, the laminate structure may comprise a least one paper layer and at least one non-combustible layer.

The consumable may be provided in a differently shaped format such as a planar format, in which case the consumable comprises a sheet. The aerosol generating material can be present on or in a support, to form a substrate. The support may, for example, be or comprise paper, card, paperboard, cardboard, reconstituted material, a plastics material, a ceramic material, a composite material, glass, a metal, or a metal alloy.

The non-combustible aerosol provision system (e.g. the aerosol provision device or consumable thereof) may comprise an aerosol-modifying agent. An aerosol-modifying agent is a substance, typically located downstream of the aerosol generation area, that is configured to modify the aerosol generated, for example by changing the taste, flavour, acidity or another characteristic of the aerosol. The aerosol-modifying agent may be provided in an aerosol-modifying agent release component, that is operable to selectively release the aerosol-modifying agent. The aerosol-modifying agent may, for example, be an additive or a sorbent. The aerosol-modifying agent may, for example, comprise one or more of a flavourant, a colourant, water, and a carbon adsorbent. The aerosol-modifying agent may, for example, be a solid, a liquid, or a gel. The aerosol-modifying agent may be in powder, thread or granule form. The aerosol-modifying agent may be free from filtration material.

In some embodiments, the non-combustible aerosol provision system, such as a non-combustible aerosol provision device thereof, may comprise a power source. The power source may, for example, comprise an electric power source or an exothermic power source. In some embodiments, the exothermic power source comprises a carbon substrate which may be energised so as to distribute power in the form of heat to an aerosol-generating material or to a heat transfer material in proximity to the exothermic power source. In some embodiments, the power source comprises a battery, such as a rechargeable battery. Examples of suitable batteries include, for example, a lithium battery (such as a lithium-ion battery), a nickel battery (such as a nickel-cadmium battery), and an alkaline battery. The power source is connected to the heating assembly and configured to supply power to the heating assembly, such that the power source is configured to supply power to the heating assembly, and the heating assembly is configured to use power supplied by the power source to heat aerosol generating material.

In some embodiments, the aerosol provision system (e.g. the aerosol provision device thereof) comprises a controller configured to control operation of the aerosol provision system. It will be appreciated the functionality of the controller can be provided in various different ways, for example using one or more suitably programmed programmable computer(s) and / or one or more suitably configured application-specific integrated circuit(s) / circuitry / chip(s) / chipset(s) configured to provide the desired functionality. It will be appreciated the controller may comprise a microcontroller (MCU), an application specific integrated circuit (ASIC), a central processing unit (CPU), and/or a microprocessor. The controller may be considered to be processing circuitry. The operations of the controller are generally controlled at least in part by software programs executed on the controller. Generally, the aerosol provision device of the aerosol provision system comprises the controller, but this need not always be the case, and in arrangements the consumable may comprise the controller.

The controller may be configured to control operation of the aerosol generator, e.g. the heating assembly thereof. While many arrangements will be discussed with regard to the controller being configured to control operation of the heating assembly of the aerosol generator, these may be more generally applied to an aerosol generator which may or may not comprise a heating assembly. The controller is connected to the power source and the aerosol generator, and is configured to control the supply of power from the power source to the aerosol generator. As such, the controller may be configured to control the heating of aerosol generating material by the heating assembly.

The controller may be configured to heat aerosol generating material in accordance with a heating profile, e.g. by causing the heating assembly to heat the aerosol generating material in accordance with the heating profile. A heating profile refers to the variation of temperature of a material over time. For example, the varying temperature of a heating element measured at the heating element for the duration of a session of use may be referred to as the heating profile of that heating element (or equally as the heating profile of the heating assembly unit comprising that heating element). The heating element provides heat to the aerosol generating material during use, to generate an aerosol. The heating profile of the heating element therefore induces the heating profile of aerosol-generating material, e.g. which is disposed near the heating element.

The aerosol provision system (e.g. the aerosol provision device thereof) may also comprise a control interface for receiving inputs and/or providing outputs. For instance, the control interface may be configured to receive inputs, and provide input data to the controller corresponding to the received inputs. The control interface may be configured to receive output data from the controller, and provide outputs corresponding to the output data received from the controller.

The control interface may comprise a user interface comprising one or more input components for receiving inputs from a user, and one or more output components for providing outputs to a user. The one or more input components are configured to receive inputs from a user, and provide corresponding input data to the controller. The one or more input components may be configured to receive the inputs from a user in the form of physical manipulation by the user. The one or more input components may comprise a button (such as a rolling button), a switch, a dial, a microphone, a camera, an accelerometer, a touchscreen, or any plurality or combination thereof. The one or more input components may be assigned to functions such as switching the aerosol provision device on and off, and selecting an operating mode of the aerosol provision system (as will be discussed in more detail herein). The one or more output components are configured to receive output data from the controller, and provide corresponding outputs to a user. The one or more output components may comprise a visual output component such as a light, e.g. an LED, a display, e.g. a seven-segment display or a screen; an auditory output component such as a speaker; a haptic component such as an eccentric rotating mass vibration motor or any plurality or combination thereof. The controller may be configured to cause the one or more output components to provide an output indicative of a property of the aerosol provision system, for example a property of the aerosol generating material, or the remaining power of the power source, and so forth.

The control interface may comprise one or more sensors for detecting one or more properties relating to the aerosol provision system (e.g. the aerosol provision device thereof), which may be configured to provide input data to the controller comprising sensor data relating to the detected one or more properties. The one or more sensors may comprise a puff sensor configured to detect a user inhalation, also known as a "puff" on the aerosol provision system. The one or more sensor may comprise a temperature sensor configured to detect a temperature relating to the aerosol provision system, e.g. the temperature of the heating assembly, the heating element, the consumable, the aerosol generating material, the environment surrounding the aerosol provision system. The one or more sensors may comprise a consumable detection sensor configured to detect when a consumable has been engaged with the aerosol provision device, e.g. at least partly received by the aerosol provision device. The one or more sensors may comprise a consumable identification sensor configured to detect a property of a consumable, e.g. a property of the aerosol generating material of a consumable. The one or more sensors may comprise a biometric sensor configured to detect a biometric property relating to the user, e.g. a fingerprint, a heart rate, a breathing property.

The aerosol provision system (e.g. the aerosol provision device thereof) may also comprise a memory. The memory may comprise volatile memory, such as random-access memory (RAM) or flash memory, and/or non-volatile memory, such as read only memory (ROM), electrically erasable read only memory (EEROM), or electrically erasable programmable read only memory (EEPROM). In embodiments, this memory comprises controller memory which is a part of the controller, and which may be integrated in the controller. The memory may additionally or alternatively comprise external memory, connected to the controller, and external to the controller. The external memory may be removable from the aerosol provision system (e.g. the aerosol provision device thereof), and may comprise an SD card or a microSD card. Software programs for execution by the controller may be stored on the memory.

The controller may be configured to monitor operation of the aerosol generator based on the input data it receives from the control interface. The input data comprises any type of external data, such as user input or input from another device, and data relating to the aerosol provision device such as properties detected by the sensors.

The controller may be configured to receive input data relating to the user such as user ID, a user gender or a geographical location. The controller may obtain the input data relating to the user via a user interface, receive the input data relating to the user from another device and/or retrieve the input data relating to the user from a memory in which it is stored.

The controller may be configured to receive input data relating to user behaviour such as any one of an indication of the aerosol provision device being powered, an indication of a start of an inhalation, an indication of an end of an inhalation and an inhalation count. The controller may receive the input data relating to user behaviour from at least one sensor. For example, the indication of a start of an inhalation may be derived from at least one of the user interface (e.g. a button being pressed), a puff sensor detecting air flowing through the aerosol provision device, a temperature sensor detecting a change in the temperature of the heating assembly and a power source sensor detecting a variation in the charge level of a power source.

The input data relating to user behaviour may comprise a time stamp (i.e. an indication of time and/or date). The controller may comprise a clock capable of providing the time stamps associated with the user behaviour. Alternatively, the controller may comprise a pulse sensor configured to estimate time based on the clock rate of the controller. The pulse sensor would be able to count the pulses emitted by the controller and, for a known frequency, calculate a time elapsed between pulses. A controller comprising such a pulse sensor may not be configured to receive input data relating to a date or a time of the day. Alternatively, a controller comprising such a pulse sensor may be configured to receive initial input data relating to a date and a time of the day prior to its first use. The initial input data may be provided manually by a user or obtained through a data connection via a wireless or wired connection with another device.

The controller may be configured to receive input data relating to a power source such as operational data of the power source or the charge level of the power source. The receipt of input data relating to the power source may be constant. Alternatively, the receipt of input data relating to the power source may occur in regular intervals and/or may occur on request, i.e. it may be triggered by an event such as detection of a user inhalation. The controller may be configured to receive the input data relating to the power source from a power source sensor comprised in the control interface. Alternatively, the controller may be configured to retrieve input data relating to the power source from a memory. Further alternatively, the power source may comprise a power source controller configured to send input data relating to the power source to the controller, e.g. in cases where the power source is external to the aerosol provision device.

The input data relating to the charge level of the power source may comprise the charge level of the power source at the beginning of an inhalation and the charge level of the power source at the end of an inhalation. During use of the aerosol provision device the controller may create and record variables from the input data such as the start time of each inhalation, the end time of each inhalation, the charge level at the start of an inhalation, the charge level at the end of an inhalation, the number of inhalations, the length of each inhalation and the time between each inhalation. The controller may be configured to derive user behaviour information such as daily inhalation counts and use patterns. The controller may be configured to provide the user with the user behaviour information, e.g. via a mobile application.

The controller may be configured to predict a depletion of the power source based on the input data, particularly based on input data relating to a power source. The predicted depletion comprises at least one depletion metric such as a future charge level of the power source, a time remaining until the power source is depleted, a time at which the power source will be depleted and a predicted number of uses (i.e. inhalations or sessions) left until the power source is depleted. The controller may be configured to use past input data stored in the memory to predict a depletion. The past input data may be data from a previous session, i.e. immediately preceding, or a past session, e.g. from a corresponding time of a previous week. The controller may be configured to use an initial value stored in the memory. The initial value may be a value from the past input data or the initial value may be a default value, e.g. if there is no past input data.

The one or more output components may be configured to receive the depletion as output data from the controller and provide the predicted depletion as at least one output to the user. The provision of the depletion as an output to the user acts as a feedback mechanism that helps the user to regulate their use of the aerosol provision device to achieve a desired power source, e.g. by reducing the frequency or intensity of use to increase the time remaining until the power source is depleted.

In some embodiments, the type of depletion predicted by the controller and provided as output to the user may depend on the processing capacity of the aerosol provision device. Some aerosol provision devices may be configured to only predict the number of uses left until the power source is depleted e.g. in a seven-segment screen, therefore providing a simpler and cheaper aerosol provision device. Other aerosol provision devices may predict all aspects of depletion to provide a user with a more complete understanding of the state of the aerosol provision device.

The controller may be configured to predict the depletion of the power source by applying statistical modelling to the input data. The statistical modelling may comprise applying regression analysis to obtain a regression model such as an adaptive regression model.

The controller may be configured predict an updated depletion, i.e. to predict a new depletion based on more recent input data, at regular intervals. The intervals may range from every inhalation to every 10 inhalations. For example, the controller being configured to update a predicted depletion every 5 inhalations would provide the user with relevant information without overwhelming the user with outputs. Alternatively or additionally, the controller may be configured to predict an updated depletion when triggered by detection of an event. The event may be a user request carried out via the user interface. The event may be the beginning of a session or at the end of a session. The event may be the charge level of the power source being lower than a threshold level or the amount of aerosol generating material being lower than a threshold amount.

Each updated depletion may be provided as an output to the user. Alternatively, updated depletions may only be provided to the user if the updated depletion is substantially different from the previous predicted depletion, i.e. differing by more than a threshold percentage, e.g. more than 5%, more than 10%, more than 20% or more than 30%. The controller may calculate the difference between the update depletion and the previous predicted depletion by comparing at least one parameter of their respective regression models.

In between the provision of a depletion as an output and the provision of an updated provision as an output, the user interface may provide no further output. Alternatively, the user interface may maintain the provision of the latest predicted output, e.g. on a display, during that time. Further alternatively the user interface may output other information regarding the aerosol provision device during that time, such as the charge level of the power source.

Moreover, the controller may be configured to adapt the frequency at which it updates and/or outputs a depletion based on the state of charge of the power source. The controller may be configured to predict updated depletions at a lower frequency if the charge level of the power source is higher than a first threshold level and/or predict updated depletions at a higher frequency if the charge level of the power source is lower than a second threshold level. For example, the controller may be configured to predict an updated depletion every 10 inhalations if the charge level of the power source is greater than 80%, predict and updated depletion every 5 inhalations if the charge level of the power source is between 10% and 80% and predict an updated depletion every 2 inhalations if the charge level of the power source is lower than 10%. The aerosol provision device may comprise only one threshold level, e.g. only the second (lower) threshold level. Alternatively, the aerosol provision device may comprise a plurality of threshold levels. The number of threshold levels and their characteristics may be customisable by the user.

The controller may be configured to store the input data in the memory for future retrieval. The controller may be configured to alternatively or additionally store data derived from the input data in the memory such as variables, a predicted depletion or an updated predicted depletion.

The control interface may comprise communication circuitry configured to connect to one or more further devices, and/or communicate data with one or more further devices. The communication circuitry communicating data with one or more further devices may comprise sending data to one or more further devices (e.g. to transfer data from the aerosol provision device to the one or more further devices), receiving data from one or more further devices (e.g. to transfer data from the one or more further devices to the aerosol provision device), or both sending data to and receiving data from one or more further devices. The term "send" with regard to data can be understood to be the emission of data from a device, while the term "transfer" can be understood to be the emission of data from a device and receipt of the data by another device. In this context, a further device to the aerosol provision device may be another aerosol provision device, a consumable, or (as described further herein) an external power source device, or a computing device. In some embodiments, the communication circuitry is integrated into the controller, and in other embodiments it is implemented separately (comprising, for example, separate application-specific integrated circuit(s), circuitry, chip(s), and/or chipset(s)).

The communication circuitry may comprise a wireless communication module configured to establish a wireless data connection with one or more further devices. The communication circuitry may also or alternatively comprise a wired communication module configured to establish a wired data connection with one or more further devices.

The controller may be configured to perform a control action in dependence of an event, in which case the controller will determine whether and how to perform the control action depending on the occurrence or not of the event, and e.g. depending on the properties of the event. For example, the controller may cause a heating assembly to heat aerosol generating material in dependence of a detected property of a consumable, such that a particular heating profile is used for a particular detected property of a consumable when heating is initiated by the controller, and for another particular detected property of a consumable no heating is used. However, while this control action may be performed directly after the event, i.e. as triggered by the event, this need not be the case, and the control action may be performed at a later time. The controller may be configured to perform a control action responsive to an event, in which case the controller will then perform the action (directly after or at a later time), i.e. the performance of the action is triggered by the event. For example, the controller may cause a heating assembly to heat aerosol generating material responsive to a puff sensor detecting a user inhalation, directly after the inhalation is detected.

The aerosol provision device may comprise a charging interface for receiving power from an external power source. For example, the charging interface may be for receiving power from an external power source comprising a charging cable. Also provided as part of a system comprising the aerosol provision system may be an external power source device configured to connect to the aerosol provision device, for example the charging interface thereof, and supply power to the aerosol provision device.

A system comprising the aerosol provision system may also comprise one or more computing devices, configured to connect to the aerosol provision system (e.g. the aerosol provision device thereof), and communicate with the aerosol provision system (e.g. the aerosol provision device thereof) using a data connection (e.g. wired or wireless). The one or more computing devices may comprise a local computing device which may be controlled or owned by the user, which may comprise a smartphone, a tablet, a personal computer (PC), a wearable device (e.g. a smart watch), a refilling device for refilling an aerosol provision device or consumable with aerosol generating material, or a connectivity hub. Additionally or alternatively, the one or more computing devices may comprise a remote computing device, which may be not controlled or owned by the user, such as a server.

Various embodiments will now be described in more detail.

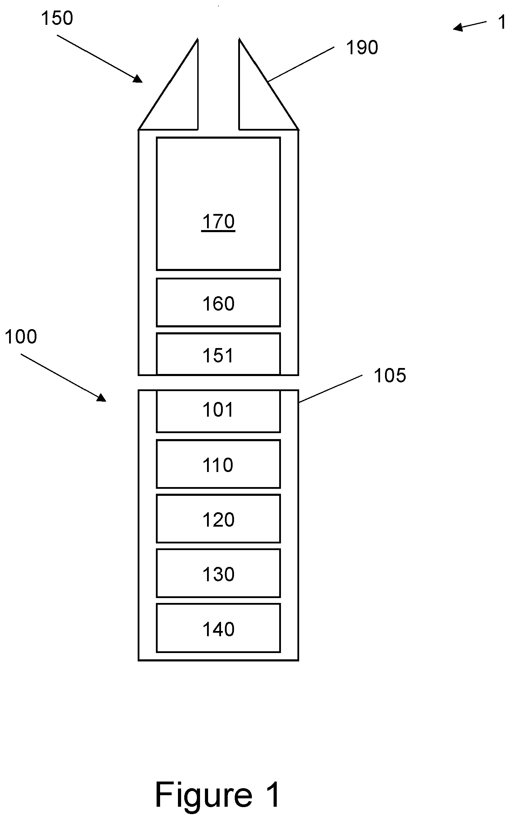

Figure 1 shows a cross-sectional view through a schematic representation of a two-piece aerosol provision system 1 in accordance with certain embodiments.

The aerosol provision system 1 is a two-piece aerosol provision system, comprising an aerosol provision device 100 and a consumable 150 comprising aerosol generating material 170. The aerosol provision device 100 comprises an outer housing 105, a memory 110, a controller 120 configured to control operation of the aerosol provision system 1, a control interface 130 for receiving inputs to the aerosol provision device and providing outputs from the aerosol provision device 100, and a power source 140 configured to supply electrical power for operation of the aerosol provision device 100. The outer housing 160 may also enclose at least partly the other components of the aerosol provision device 100, namely the memory 110, controller 120, the control interface 130, and the power source 140. The aerosol provision device 100 is a handheld electronic vapour device, meaning that the outer housing 160 enclosing the other components is dimensioned and configured to be held in the hand of a user. In other words, the device is portable.

The consumable 150 comprises a reservoir containing liquid aerosol generating material 170, and a mouthpiece 190 through which the user can draw aerosol that has been generated from the aerosol generating material 180. The consumable also comprises a heating assembly 160 configured to heat the aerosol generating material 170. In use, an engagement interface 101 of the aerosol provision device 100 is engaged with an engagement interface 151 of the consumable, each of these engagement interfaces comprising mechanical engagement means for mechanically coupling to one another. Each engagement interface 101, 151 also comprises an electrical engagement interface, such that the aerosol provision device 100 can be electrically connected with the consumable 150. The electrical engagement interface 101 of the aerosol provision device is configured to supply electrical power, from the power source 140, to the consumable, in particular to the heating assembly 160 of the consumable. The controller 120 is configured to control the supply of electrical power from the power source 140 to the heating assembly 160, so as to control the heating of the aerosol generating material 170 by the heating assembly 160.

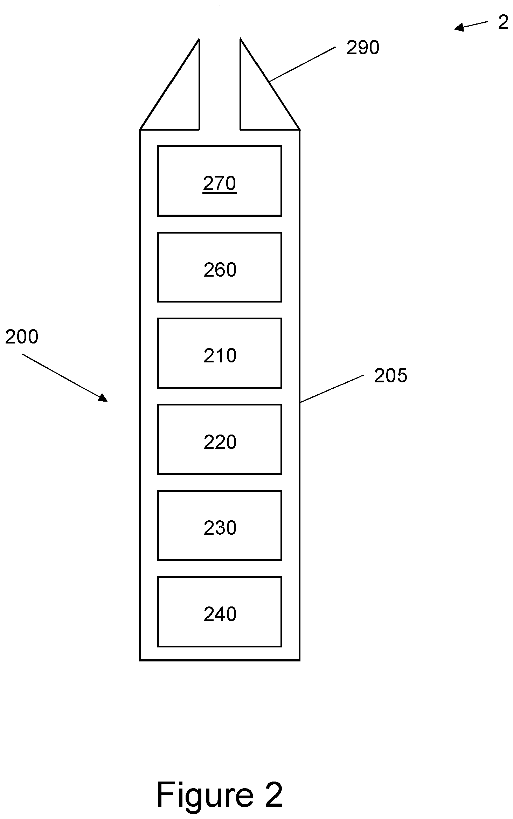

Figure 2 shows a cross-sectional view through a schematic representation of a one-piece aerosol provision system 2 in accordance with certain embodiments.

The aerosol provision system 2 is a one-piece aerosol provision device 200. The aerosol provision device 200 comprises an outer housing 205, a memory 210, a controller 220 configured to control operation of the aerosol provision device 200, a control interface 230 for receiving inputs to the aerosol provision device 200 and providing outputs from the aerosol provision device 200, a power source 240 configured to supply electrical power for operation of the aerosol provision device 200, a reservoir containing liquid aerosol generating material 270, and a heating assembly 260 configured to heat the aerosol generating material 270. The outer housing 205 may also enclose at least partly the other components of the aerosol provision device 200, namely the memory 210, the controller 220, the control interface 230, the power source 240, the reservoir containing liquid aerosol generating material 270, and the heating assembly 260. The aerosol provision device 200 also comprises a mouthpiece 290 through which the user can draw aerosol that has been generated from the aerosol generating material 270.

The aerosol provision device 200 is a handheld electronic vapour device, meaning that the outer housing 205 enclosing the other components is dimensioned and configured to be held in the hand of a user. In other words, the device is portable. The aerosol provision device 200 is a disposable one-piece aerosol provision device, which the user can dispose of once the aerosol generating material 180 has been exhausted, and which is not configured to receive a consumable, and is not configured to be refillable by the user.

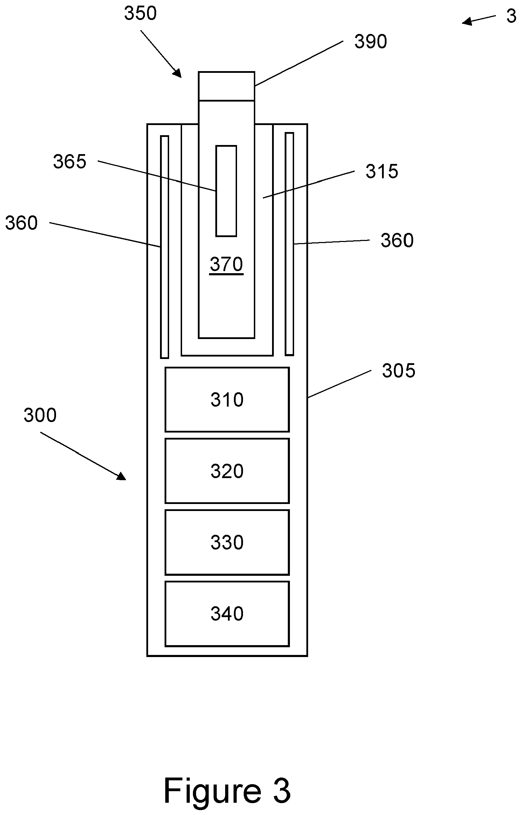

Figure 3 shows a cross sectional view through a schematic representation of a two-piece aerosol provision system 3 in accordance with certain embodiments.

The aerosol provision system 3 is a two-piece aerosol provision system, comprising an aerosol provision device 300 and a consumable 350 comprising aerosol generating material 370. The aerosol provision device 300 comprises an outer housing 305, a memory 310, a controller 320 configured to control operation of the aerosol provision system 3, a control interface 330 for receiving inputs to the aerosol provision device 300 and providing outputs from the aerosol provision device 300, a heating assembly comprising a magnetic field generator 360 configured to generate a varying magnetic field, and a power source 340 configured to supply electrical power for operation of the aerosol provision device 300. The outer housing 305 may also enclose at least partly the other components of the aerosol provision device 300, namely the controller 320, the control interface 330, the magnetic field generator 360, and the power source 340. The aerosol provision device 300 is a handheld electronic vapour device, meaning that the outer housing 305 enclosing the other components is dimensioned and configured to be held in the hand of a user. In other words, the device is portable.

The consumable 350 comprises aerosol generating material 370 which is in the form of a solid or gel. The consumable 350 is in a rod format, and is received by a heating chamber 315 of the aerosol provision device 300. The magnetic field generator 360 is configured cause the heating chamber 315 to become heated, and the aerosol generating material 370 of the consumable 350 within the heating chamber 315. To do this, the heating assembly comprises a heating element 365 in the consumable, having susceptor material which is susceptible to heating by penetration with a varying magnetic field generated by the magnetic field generator 360. The magnetic field generator 360 is configured to generate this varying magnetic field, which penetrates the heating chamber 315, and the heating element 365 of the consumable 350, causing it to become heated, and in turn heat the aerosol generating material 370.

In this arrangement, the consumable comprises a mouthpiece 390, through which the user can draw aerosol that has been generated from the aerosol generating material 370. The aerosol provision device 300 and consumable 350 do not require respective engagement interfaces configured to enable the aerosol provision device 300 and consumable 350 to be electrically connected to one another, as an electrical connection therebetween is not used to heat the aerosol generating material 370.

In some embodiments the aerosol provision device may be functionally independent from other devices, i.e. it is connectable to other devices but only requires limited connectivity with other devices, if any, to function. The provision of an aerosol provision device that is functionally independent from other devices reduces the need for connectivity circuitry and thereby provides a simpler and cheaper aerosol provision device, e.g. in the case of single-use aerosol provision devices. In alternative embodiments, the aerosol provision device may be connectable to other devices, e.g. as part of a system.

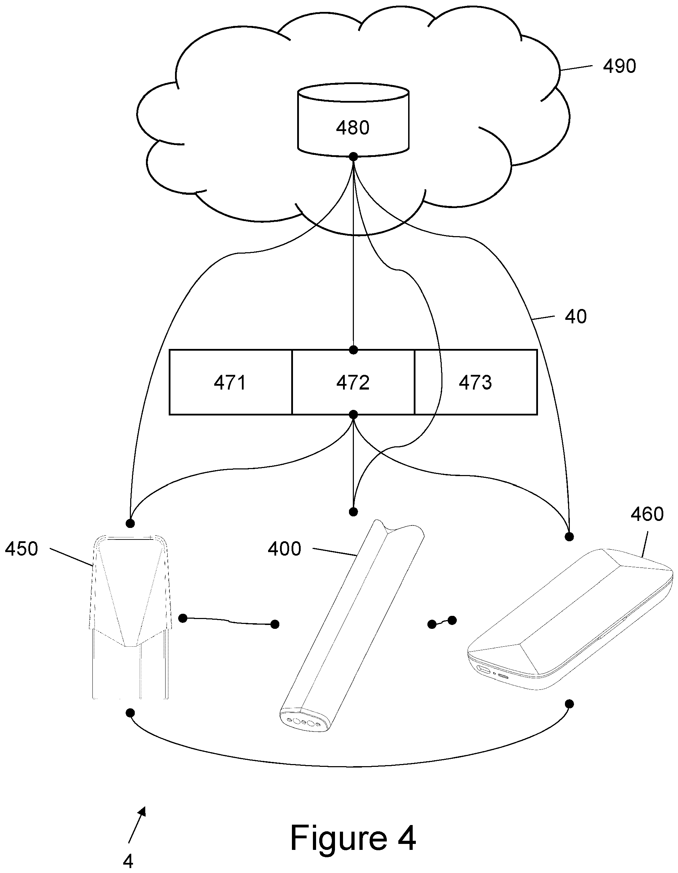

Figure 4 shows a schematic representation of system, comprising an aerosol provision system 4 comprising an aerosol provision device 400 and a consumable 450, an external power source device 460, local computing devices 471, 472, 473, and a remote computing device 480. The aerosol provision device 400 and consumable 450 may have any of the properties of the aerosol provision devices 100, 200, 300, and consumables 150, 350 discussed above.

In this arrangement, the remote computing device 480 is a server, which exists on the cloud 490. The aerosol provision system 4 may correspond to any of the aerosol provision systems 1, 2, or 3 discussed above, or any other aerosol provision system. Each of the local computing devices 471, 472, 471 are connected to each other, as well as being connected to each further device. Various data connections 40 between each of these devices is depicted, illustrating how data may be sent between any given first and second device.

In use, when these data connections 40 are established (either using wired or wireless protocols), data can be sent from a first device, such as the aerosol provision device 400, to a second device, such as the remote computing device 480, either directly via the direct data connection between these two devices (if it exists), or indirectly, relayed by another device or multiple other devices.

In the case of the aerosol provision device 400 and the remote computing device 480, data such as usage data collected by the aerosol provision device can be sent to the remote computing device 480 by sending the data to the external power source device 460 through a wired data connection. Then, the external power source device sends the data to first local computing device 471, which is a smartphone 471, through a wireless data connection. The wireless data connection between the smartphone 471 and the external power source device 460 is a Bluetooth connection, established using a Bluetooth module of the smartphone 471 and a Bluetooth module of the external power source device 460.

The smartphone 471 then sends the data to the remote computing device 480 through a wireless data connection. The wireless data connection between the smartphone 471 and the remote computing device 480 is a 3G wireless connection, established using a 3G module of the local computing device, connected with a corresponding communication node (such as a telecommunications "base station") which provides connectivity with the remote computing device 480.

A user may also use this network of data connections 40 to cause control actions to be performed on the aerosol provision device 400 by the controller thereof. Using an app on second local computing device 472 such as a smartphone or a personal computer, the user can select a control action, and the personal computer 472 then sends data relating to the control action to the remote computing device 480 through a wired data connection. The remote computing device 480 then sends data relating to the control action to the smartphone 471, using the 3G wireless connection discussed above.

The smartphone 471 then sends data relating to the control action to the external power source device 460 using the Bluetooth connection discussed above, and the external power source device 460 then sends data relating to the control action to the aerosol provision device 400 through the wired data connection between the aerosol provision device 400 and the external power source device 460. The data relating to the control action is received by the controller of the aerosol provision device 400, and the controller causes the aerosol provision device 400 to perform the control action.

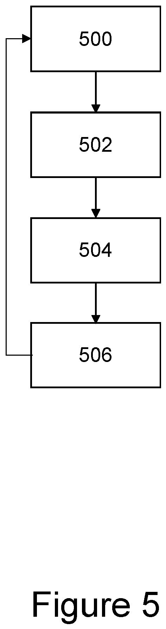

Figure 5 show a schematic representation of a computer-implemented method of predicting depletion of a power source. The steps of the method are carried out by a controller. The controller may be any one of the above-mentioned controllers such as controllers 120, 220 and 320.

The first method comprises a first step 500 of receiving input data. The input data may relate to any one of user behaviour, e.g. an inhalation count; a power source, e.g. a charge level of a power source (such as a current charge level of the power source); sensor data, e.g. inhalation sensor; and combinations thereof. The input data may be input data relating to a current (i.e. ongoing or unfinished) session during use of the aerosol provision device indicating the start of a session.

If the input data relates to user behaviour or to sensor data, the controller may be configured to retrieve input data relating to the power source.

The method further comprises a second step 502 of obtaining a substantially constant rate of decrease in charge level of the power source, which is referred to herein as the "rate of charge decrease".

The controller may obtain the rate of charge decrease by calculating the rate of charge decrease based on the input data. The controller is configured to calculate the rate of charge decrease through the division of a decrease in the charge level of the power source by the time elapsed during the decrease in the charge level. The rate of charge level may therefore be calculated between the beginning and the end of an inhalation or between a first inhalation and a second inhalation. The rate of charge level may therefore also be calculated in any one of the following ways: between a first inhalation of a session and an immediately subsequent inhalation of the session; between a first inhalation of a session and a subsequent inhalation separated from the first inhalation by one or more inhalations; and between a first inhalation of a session and a last inhalation of the session.

The controller may obtain the rate of charge decrease by retrieving past input data stored in a memory and calculating the rate of charge decrease based on the past input data. The controller may obtain the rate of charge decrease by calculating the rate of charge decrease based on the input data received by the controller and the past input data.

The controller may obtain the rate of charge decrease by retrieving a rate of charge decrease stored in the memory. The rate of charge decrease stored in the memory may be a rate of charge decrease previously calculated based on past input data or may be a default value, e.g. a value included as part of the factory settings of the aerosol provision device. The controller may obtain the rate of charge decrease by retrieving more than one rate of charge decrease stored in the memory and calculating an average of the more than one rate of charge decrease.

The method further comprises a third step 504 of predicting a depletion of the power source by using the rate of charge decrease. The controller is configured to apply a linear regression model following the formula y = *ax* + *b* in which the parameter "a" is the rate of charge decrease. The controller being configured to predict the depletion of the power source using a simple formula reduces the computational power required to carry out the prediction, thereby reducing the complexity and cost of the aerosol provision device.

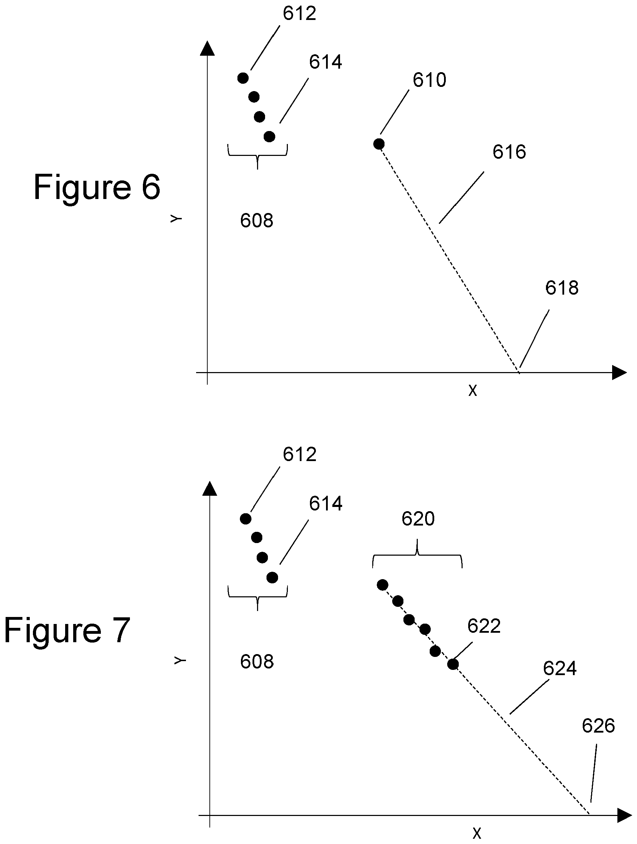

As will be described in more detail in relation to Figures 6 to 8, the controller is configured to apply the linear regression model to a charge level associated with a most recent inhalation, i.e. the current or recent charge level, to predict a depletion of the power source.

The method further comprises a fourth step 506 of providing the depletion as an output to the user via a user interface. For example, the controller may be configured to provide the user with a visual output of the remaining number of inhalations left until the power source is depleted, an auditory output of a time remaining until the power source is depleted or a haptic output of a number of sessions remaining until the power source is depleted.

The method may additionally comprise the step of storing at least one of the input data and the calculated rate of charge decrease, optionally together with at least one timestamp, in a memory. The calculated rate of charge decrease can be stored in the memory by storing the parameter "a". The controller being able to store the calculated rate of charge decrease as a single value reduces the memory storage required by the aerosol provision device, thereby reducing the complexity and cost of the aerosol provision device.

The controller may be configured to store input data comprising a plurality of values and/or a plurality of rates of charge decrease stored in any suitable way such as in an array, a matrix or a look-up table. For example the algebraic equation may be stored in a twoparameter array as [a,b] such that the equation y = 1*x* + 2 would be stored as [1,2]. The input data, rates of charge and/or the at least one timestamp may be stored a single array, matrix or look-up table or may be distributed across more than one array, matrix or look-up table. Increasing the number of locations in which the input data and/or the at least one timestamp is stored would decrease the time required to access the input data.

Moreover, the method comprises repeating the above steps upon receipt of further (i.e. newer) input data in order to calculate an updated rate of charge decrease and predict an updated depletion. As previously mentioned, the controller may be configured to predict an updated depletion at regular intervals, e.g. every 5 inhalations. The controller may alternatively be configured to predict an updated depletion for each inhalation. The controller may additionally or alternatively be configured to predict an updated depletion at the beginning of a session and/or at the end of a session.

The controller may be configured to provide each updated depletion as an output. In between the provision of a depletion as an output and the provision of an updated provision as an output, the user interface may provide no further output. Alternatively, the user interface may maintain the provision of the latest predicted output, e.g. on a display, during that time. Further alternatively the user interface may output other information regarding the aerosol provision device during that time, e.g. the charge level of the power source.

Figures 6 to 8 show schematic representations of the method being applied according to different schemes. Figures 6 to 8 more specifically show graphs depicting a variation in charge level of a power source over time in which the Y-axes represent the charge level of the power source and the X-axes represent time. Mentions of inhalations in relation to the graphs refer to charge level data indicative of inhalations, which are shown as points for illustrative purposes.

Figure 6 shows a first session 608 comprising a plurality of inhalations and a further inhalation 610 indicative of the start of a second session. The first session 608 and the second session are separated by a pause of more than a threshold duration, e.g. more than 5 minutes. In accordance with a first scheme, the controller is configured to calculate a rate of charge decrease from the decrease in charge level during a past session. The first scheme may be used, for example, for the first inhalation of a new session. It may not be possible to know what the rate of charge decrease during a session will be when only one inhalation has been carried out by the user. However, it is a reasonable assumption that the rate of charge decrease for a new session is likely to be similar to that of a past session. The first scheme may thereby be used to provide the user with a depletion prediction that will be particularly accurate for users having a consistent user behaviour. Moreover, the first scheme may be used by aerosol provision devices having a limited memory capacity, e.g. devices only configured to record input data relating to a limited number of most recent sessions.

In the example shown in Figure 6, the past session is a previous session, i.e. the first session 608. The rate of charge decrease is calculated by dividing the decrease in charge level of the power source between the beginning 612 and the end 614 of the first session 608 by the time elapsed between them. The controller is configured to then apply the calculated rate of charge decrease to the further inhalation 610 to predict a depletion of the power source. In the case of Figure 6, a predicted future charge level 616 is shown as a dotted line and a time at which the power source will be depleted 618 is shown at the point in which the predicted future charge level 616 intersects the X-axis.

In other examples the past session may not be a previous session. A previous session may be disregarded if it is considered unusual or unrepresentative of normal user behaviour.

As explained in relation to Figure 5, the controller may be configured to store the calculated rate of charge decrease in a memory after the first session is finished and to retrieve it from the memory for use in predicting the depletion once it receives input data of the further inhalation 610.

Figure 7 plots the same points as Figure 6 relating to the first session 608 and additionally shows the second session 620 to comprise a plurality of inhalations. In accordance with a second scheme, the controller is configured to calculate the rate of charge decrease from the decrease in charge level during an ongoing session, which in this case is the second session 620. The controller is configured to calculate the rate of charge decrease in a similar way as described in relation to Figure 6. The controller is configured to then apply the calculated rate of charge decrease to the latest inhalation 622 of the second session 620 to predict a depletion of the power source. In the case of Figure 7, a predicted future charge level 624 is shown as a dotted line and a time at which the power source will be depleted 626 is shown at the point in which the predicted future charge level 624 intersects the X-axis.

The second scheme may be used during an ongoing session once a user has carried out two or more inhalations. The second scheme may provide the user with a depletion prediction that is more accurate compared to the first scheme because it is based on the ongoing user behaviour which may differ from a past user behaviour. The controller may be configured to predict at least one updated depletion in accordance with the second scheme during the ongoing session, thereby providing and adaptive depletion prediction.

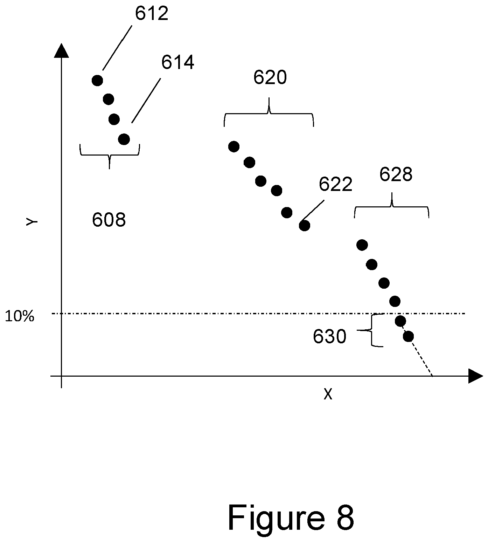

Figure 8 plots the same points as Figures 6 and 7 relating to the first session 608 and the second session 620 and additionally shows a third session 628 that is ongoing. The graph shown in Figure 8 further comprises a threshold charge level of 10% shown as a horizontal dotted line. In accordance with a third scheme, the controller is configured to calculate the rate of charge decrease from a decrease in charge level during a latter portion 630 of an ongoing session. In the example shown in Figure 8, the rate of charge decrease is calculated using the input data from the last two inhalations which are below the threshold charge level and form the latter portion 630. The third scheme may be used when the power source of the power source of the aerosol provision device has a low charge level, e.g. when the aerosol provision device is running out of battery.

Alternatively, the latter portion of an ongoing session may correspond any one of the last 10 inhalations or less, the last 5 inhalations or less and the last 3 inhalations or less.

Moreover, when the controller is configured to predict the depletion according to the third scheme, the prediction of an updated depletion is carried out more frequently. In a scenario in which the power source is close to being depleted, the provision of providing depletion outputs every 5 inhalations may not be sufficiently accurate and the power source may become depleted in between those outputs. The use of a rate of charge based on the latest input data therefore ensures a higher prediction accuracy at a time when the user may be most concerned about the remaining charge level of the power source.

The controller may be configured to predict the depletion time according to a fourth scheme in which the controller retrieves the rate of charge decrease that is stored in a memory. In the case of the fourth scheme, the rate of charge decrease may relate to a past time period such as the previous day, more than a day ago, a week ago, more than a week ago or a month ago.

A user behaviour comprises daily and weekly patterns and it may therefore be more relevant to retrieve a rate of charge decrease stored in a memory rather than calculating it from a previous or relatively recent session. For example, the controller may be configured to retrieve a rate of charge decrease associated with the same time of the day of a previous day (i.e. one corresponding to the current time of use of the aerosol provision device by the user). This would allow the aerosol provision device to provide more relevant and less variable predictions based on the use behaviour and daily use routines of the user.

Moreover, the controller may be configured to retrieve a rate of charge decrease associated with the same time of the day of a corresponding day of the previous week (e.g. if the aerosol provision device is used on a Tuesday at 14:00, the controller would retrieve a rate of charge decrease approximately associated with Tuesday 14:00 from the previous week). This would allow the aerosol provision device to provide more relevant and less variable predictions based on the use behaviour of the user and account for weekly pattern variations. For example, the total usage and timing of the use of the aerosol provision device by a user may vary because of the user's work shifts or other recurrent commitments.

A controller configured to predict the depletion according to the fourth scheme would require a greater memory storage compared to other embodiments but would provide depletion predictions that some users may consider to be more accurate and useful.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention. Various embodiments of the invention may suitably comprise, consist of, or consist essentially of, appropriate combinations of the disclosed elements, components, features, parts, steps, means, etc, other than those specifically described herein. In addition, this disclosure may include other inventions not presently claimed, but which may be claimed in future.

## Claims

**1.** An aerosol provision device comprising:
a controller configured to receive input data relating to a charge level of a power source,
wherein the controller is configured to predict a depletion of the power source by using a substantially constant rate of decrease in charge level based on the input data.

**2.** An aerosol provision device according to claim 1, wherein the substantially constant rate of decrease in charge level is calculated from a decrease in the charge level over a period of time.

**2.** An aerosol provision device according to claim 1 or claim 2, wherein the substantially constant rate of decrease in charge level is calculated from a decrease in the charge level based on past input data.

**3.** An aerosol provision device according to any one of the preceding claims, wherein the depletion comprises at least one of:
a future charge level of the power source;
a time remaining until the power source is depleted;
a time at which the power source will be depleted; and
a predicted number of uses left until the power source is depleted.

**4.** An aerosol provision device according to any one of the preceding claims, wherein the controller is configured to predict the depletion according to a first scheme in which the substantially constant rate of decrease in charge level is calculated from a decrease in charge level during a past session.

**5.** An aerosol provision device according to any one of the preceding claims, wherein the controller is configured to predict the depletion according to a second scheme in which the substantially constant rate of decrease in charge level is calculated from a decrease in charge level during an ongoing session.

**6.** An aerosol provision device according to claim 5, wherein the decrease in charge level during an ongoing session is calculated from a decrease in charge level between the beginning of a first use of the aerosol provision device and the end of a second use of the aerosol provision device.

**7.** An aerosol provision device according to any one of the preceding claims, wherein the controller is configured to predict the depletion according to a third scheme in which the substantially constant rate of decrease in charge level is calculated from a decrease in charge level during a latter portion of an ongoing session.

**8.** An aerosol provision device according to claim 7, wherein the controller is configured to predict the depletion according to the third scheme when the charge level of the power source is below a threshold level.

**9.** An aerosol provision device according to claim 7 or claim 8, wherein the latter portion of the ongoing session corresponds to fewer than the last 10 uses, fewer than the last 5 uses or fewer than the last 3 uses of the aerosol provision device during the ongoing session.

**10.** An aerosol provision device according to any one of the preceding claims, wherein the controller is configured to calculate an updated substantially constant rate of decrease in charge level is during an ongoing session.

**11.** An aerosol provision device according to any one of the preceding claims, wherein the controller is configured to predict the depletion time according to a fourth scheme in which the controller retrieves the substantially constant rate of decrease in charge level that is stored in a memory.

**12.** An aerosol provision device according to any one of the preceding claims, wherein the controller is configured to predict the depletion according to the fourth scheme for a first session of use.

**13.** An aerosol provision device according to any one of the preceding claims, wherein the controller is configured to store the substantially constant rate of decrease in charge level in a memory after the end of a session

**14.** An aerosol provision system comprising the aerosol provision device of any one of the preceding claims and a consumable.

**15.** A computer-implemented method of predicting a depletion of a power source comprising:
receiving input data of a charge level of a power source; and
predicting a depletion by using a substantially constant rate of decrease in charge level based on the input data.
